# EUROPEAN PATENT APPLICATION

(11) **EP 1 518 659 A2**
(43) Date of publication of application: **30.03.2005**
(21) Application number: 04019995.2
(22) Date of filing: 23.08.2004
(51) Int. Cl.: B29C 51/08, F16B 47/00, A47K 3/00, B29C 65/02

(54) **Method for producing sucker elements, sucker elements produced by this method**

(30) Priority: 26.09.2003 IT MI20031849
(71) Applicant: Minurri, Donato, 21040 Gerenzano (Varese) (IT)
(72) Inventor: Minurri, Donato, 21040 Gerenzano (Varese) (IT)
(74) Representative: Modiano, Guido, Dr.-Ing.

(57) **Abstract**

A method for producing sucker elements (20) consisting in thermoforming a layer of plastic material (1) by means of two mold parts (2,3), which form at least one impression that has a frustum-like peripheral shape, the mold parts (2,3) forming means for blanking the peripheral rim of each thermoformed element with a substantially flat central shape surrounded by a frustum-shaped portion.

## Description

The present invention relates to a method for producing sucker elements, to the sucker element produced with the method, and to an article with a sucker.

As is known, sucker elements are used in many fields of application and are generally constituted by a substantially bell-shaped body which has, in its axial central portion, a tang for connection to the article to which the suckers are to be applied.

The presence of the protruding element causes considerable problems in many fields of application, and in particular in the case of mats for showers, bathtubs and the like, the thickness of the sucker element produces an unpleasant protrusion that is certainly not appreciated by the user.

Also, the presence of the protruding central part inevitably produces a stiffening of the sucker, which is therefore less effective because, when it is compressed, it is not possible to completely expel the air.

The aim of the invention is to eliminate the problems noted above, by providing a method for producing sucker elements that can be applied very easily to a wide range of articles, always achieving optimum effects.

Within this aim, an object of the invention is to provide a sucker element that is particularly flat and therefore does not produce an appreciable thickness in an axial direction, making it particularly suitable for use on bath mats and the like.

A further object of the present invention is to provide a method that, thanks to its particular characteristics of execution, is capable of giving the greatest assurances of reliability and safety in use.

A further object of the present invention is to provide a method for producing sucker elements and articles with suckers that can be easily obtained starting from commonly commercially available elements and materials and is also competitive from a merely economical standpoint.

This aim and these and other objects that will become better apparent hereinafter are achieved by a method for producing sucker elements, according to the invention, characterized in that it comprises thermoforming a layer of plastic material by means of two mold parts, which form at least one impression that has a frustum-like peripheral shape and form means for blanking the peripheral rim of each thermoformed element with a substantially flat central shape surrounded by a frustum-shaped portion.

Further characteristics and advantages of the invention will become better apparent from the description of a preferred but not exclusive embodiment of a method for producing sucker elements, illustrated by way of nonlimiting example in the accompanying drawings, wherein:
Figure 1 is a schematic sectional view, in an open position, of the mold parts for thermoforming the sucker element;
Figure 2 is a view of the mold parts in the closed position;
Figure 3 is a schematic view of a sucker element;
Figure 4 is a sectional view, in the open position, of the mold for connecting the sucker element to an article;
Figure 5 is a schematic view of the mold in a closed position;

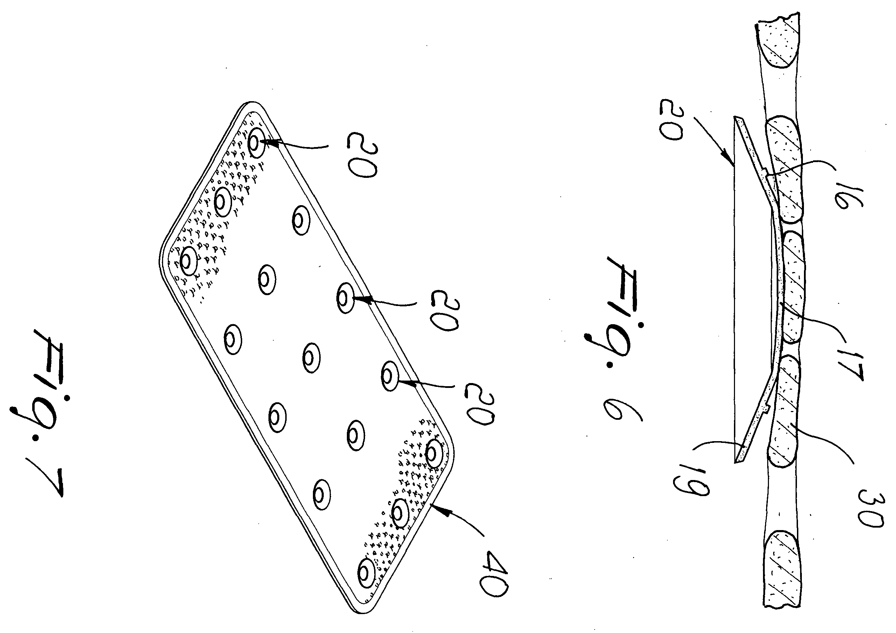

Figure 6 is an enlarged-scale sectional view of the detail of the sucker element connected to an article constituted by a mat and the like;
Figure 7 is a schematic view of an article constituted by a bathtub mat.

With reference to the figures, the method for producing sucker elements, according to the invention, entails preparing a layer of plastic material, preferably soft PVC (Polyvinylchloride), generally designated by the reference numeral 1, which is inserted between two mold parts, specifically a lower mold part 2 and an upper mold part 3, which thermo form the sucker element.

For thermoforming, the mold parts form one or more impressions, which are provided by means of a male element 10, which is connected for example to the lower mold part 2, and a female element 11, which is associated with the other mold part, for example the upper mold part 3.

Preferably, the male element 10 is frustum-shaped, with a narrow central protrusion 12, while the female element 11 has a frustum-shaped recess that blends with a central hollow 13 arranged at the protrusion 12.

Means for blanking the peripheral rim of each thermoformed. element are further provided peripherally and are formed by a blade-like lip 14, which is connected to the female element 11 and is adapted to blank the material flush with the protrusion 10.

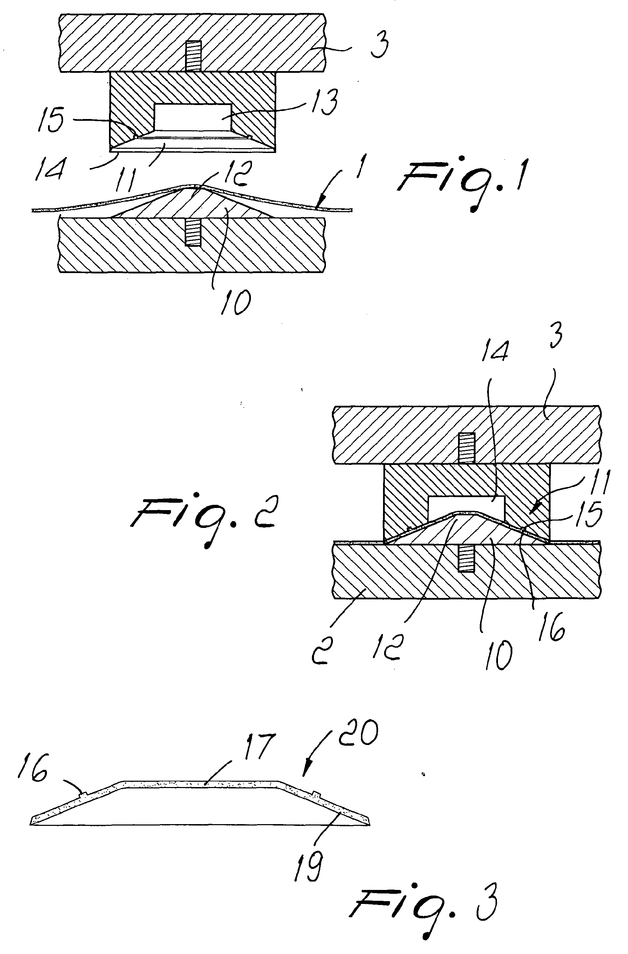

Preferably, in the female element 11 there is also a recess 15, which allows to provide a protruding ridge 16 on the sucker element, which is generally designated by the reference numeral 20 and, as shown in Figure 3, has a substantially flat central portion 17 that is surrounded by a frustum-shaped rim 19, on a central portion of which the ridge 16 is provided.

It should be added to the above that it is optionally possible to provide the sucker element by injecting plastic material into molds that have the shape selected for the sucker element.

The sucker element thus produced can be applied very quickly and easily to articles of various kinds.

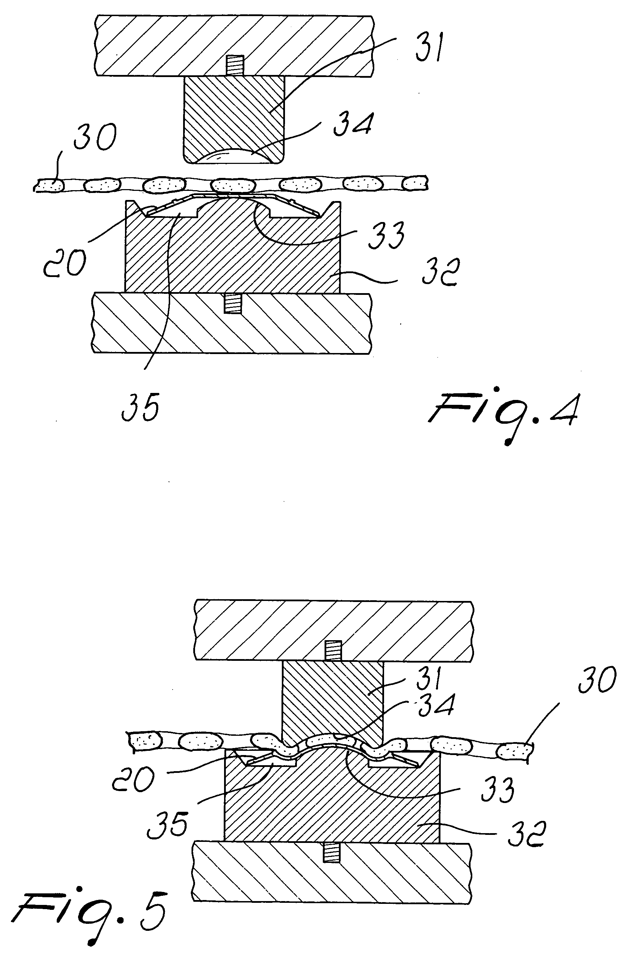

In the specific case of mats for showers, bathtubs and the like, it is possible to provide a layer 30 made of relatively soft plastic material, which can be inserted between application mold parts, shown in Figures 4 and 5, which are formed by a male plug 31 that engages a die 32 provided with a central portion 33 that is substantially cambered and engages a recessed complementary seat 34, which is arranged substantially at the substantially flat central part of the sucker element.

The die 32 also has an annular hollow 35, in which in practice the frustum-shaped portion of the sucker element arranges itself.

The application mold parts are closed so as to produce thermal bonding, which can be performed by means of high frequencies, ultrasound or other methods that allow to stably join the central portion 17 of the sucker element 20 to the layer 30 made of soft material, generally expanded plastic material.

In this manner, mats are obtained, generally designated by the reference numeral 40, in which the suckers do not have a thickness that is unpleasant for the user; moreover, the suckers, thanks to the frustum-shaped configuration of their peripheral rim, are capable of achieving a particularly high and stable adhesion force.

It is thus evident from what has been described above that the invention achieves the proposed aim and objects, and in particular the fact is stressed that a sucker element is provided which has particular characteristics that are particularly suitable for applying it to bathtub mats and the like, always having considerable effectiveness in application.

The sucker element according to the invention is susceptible of numerous modifications and variations, within the scope of the appended claims.

All the details may further be replaced with other technically equivalent elements.

In practice, the materials used, as well as the contingent shapes and dimensions, may be any according to requirements.

The disclosures in Italian Patent Application No. MI2003A001849 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for producing sucker elements, **characterized in that** it comprises thermoforming a layer of plastic material by means of two mold parts, which form at least one impression that has a substantially frustum-like peripheral shape and form means for blanking the peripheral rim of each thermoformed element with a substantially flat central portion surrounded by a frustum-shaped portion.

2. The method according to claim 1, **characterized in that** said lower mold part and said upper mold part have a male element that is connected to one of said mold parts and a female element that is associated with the other of said mold parts, said male element being substantially frustum-shaped, with a narrow central protrusion, said female element having a frustum-shaped recess that blends with a central hollow arranged substantially at said protrusion.

3. The method according to the preceding claims, **characterized in that** said means for blanking the peripheral rim of each thermoformed element comprise a blade-like lip, which is connected to said female element.

4. The method according to one or more of the preceding claims, **characterized in that** it comprises, on said female element, a recess for providing a protruding ridge that has a substantially circular shape on the sucker element being provided.

5. The method according to one or more of the preceding claims, **characterized in that** said layer of plastic material is constituted by polyvinyl chloride.

6. The method for producing sucker elements, **characterized in that** it consists in producing, by injection, a layer of plastic material inside a mold that forms an impression that is peripherally frustum-shaped and has a substantially flat portion in its central region.

7. A sucker element **characterized in that** it comprises a layer of plastic material that forms peripherally a substantially frustum-shaped configuration and forms centrally a substantially flat portion.

8. A sucker element according to one or more of the preceding claims, **characterized in that** it comprises, on said frustum-shaped portion, a protruding ridge that has a substantially circular shape.

9. A method for applying a sucker element to articles in general, **characterized in that** it comprises providing application mold parts, between which it is possible to interpose a layer made of plastic material, said mold parts having a male plug, which can engage a die that forms a substantially cambered central protrusion that can engage a recessed complementary seat arranged substantially at the substantially flat central portion of a sucker element in order to perform thermal bonding.

10. The method for applying a sucker element according to claim 9, **characterized in that** said die comprises an annular hollow for accommodating the frustum-shaped portion of said sucker element.

11. The method according to one or more of the preceding claims, **characterized in that** said thermal bonding is performed by means of high frequencies.

12. The method according to one or more of the preceding claims, **characterized in that** said thermal bonding is performed by means of ultrasound.

13. An article with sucker elements, **characterized in that** it comprises a layer of plastic material, on at least one face of which sucker elements are connected by thermal bonding, said sucker elements having a substantially flat central portion that is connected to a substantially frustum-shaped peripheral portion, said substantially flat central portion and said substantially frustum-shaped peripheral portion having substantially the same thickness.
